# EUROPEAN PATENT SPECIFICATION

(11) **EP 4 115 741 B1**
(45) Date of publication and mention of the grant of the patent: **25.09.2024**
(21) Application number: 21383037.5
(22) Date of filing: 16.11.2021
(51) Int. Cl.: A23L 2/40, A23L 2/39

(54) **A BEVERAGE COMPOSITION WITH CONTROLLED EFFERVESCENCE FOR INFUSION IN A COLD LIQUID**
IN KALTE FLÜSSIGKEIT INFUSIONIERBARES GETRÄNK MIT KONTROLLIERTER BRAUSEWIRKUNG
BOISSON POUR INFUSION DANS UN LIQUIDE FROID À EFFERVESCENCE CONTRÔLÉE

(43) Date of publication of application: 11.01.2023
(73) Proprietor: Pompadour Ibérica S.A., 03114 Alicante (ES)
(72) Inventor: Svoboda Menor, Gema, 03007 Alicante (ES); Osés Pejenaute, Natividad, 03110 Muchamiel (ES)
(74) Representative: Ballester Cañizares, Rosalia

(56) References cited:
- WO-A1-2022/189294
- WO-A1-97/29642
- WO-A2-2010/078192
- US-A- 3 660 107
- US-A1- 2007 059 362
- US-A1- 2020 375 221

## Description

### Technical field

This invention relates to a brewable beverage in a cold liquid and controlled effervescence, made from different aromatic botanical vegetable and/or fruit species, in addition to ingredients that provide aromas and flavours similar to those of currently marketed tonics, to be consumed individually or combined with alcoholic beverages.

### Background to the invention

Tonic originates from shamans and healers from Peru, Ecuador y Bolivia, who were the first to use quinine. Tonic, these days, is a type of refreshing beverage, characterised by its bitter taste and in that it contains large quantities of gas. In the past, the original used only to consist of two ingredients, carbonated water and quinine. Later, they started to add two other ingredients, citric acid and sugar, to mask the bitter taste of the quinine.

Quinine, (C₂₀H₂₄ N₂O₂) is a natural, white, crystalline alkaloid with antipyretic, antimalarial and analgesic properties produced by some species of the genus Cinchona. It has a very bitter taste and is a stereoisomer of quinidine. It has traditionally been used to combat the effects of malaria. It is responsible for the bitter taste of tonic.

Carbonated water consists of carbonic acid (H₂CO₃), which is responsible for its fizzy form. Citric acid is a tricarboxylic organic acid. It is present in most fruits, especially in citrus fruits such as lemons and oranges. Its molecular formula is C₆H₈O₇. Within tonic, its function is to counteract the bitter taste of quinine.

Sucrose, whose chemical formula is C₁₂H₂₂O₁₁, is, in the broadest use of the word, called sugar, also known as «common sugar» or «table sugar». Sugar can be classified according to its origin (from sugar cane or beet), but also according to its degree of refinement or its characteristics. For example, white sugar, brown sugar, icing sugar, among others.

Tonic, therefore, is a carbonated soft drink with quinine. Quinine is an alkaloid extracted from the bark of the cinchona tree and has digestive and nervous antipyretic, analgesic and antimalarial tonic properties -hence the name of the beverage. Notwithstanding, being a carbonated beverage, it generates a large amount of gas during consumption, which can be annoying or harmful.

Document ES2283170 describes a process for obtaining a water-soluble carbonated soft drink, characterised by mixing a proportion by weight of 1.58 per cent saccharin, 2.74 per cent cyclamate, 0.61 per cent aspartame, 8.53 per cent sodium bicarbonate, 26.81 per cent malic acid, 3.66 per cent citric acid, 3.05 per cent CMC-Na, 46.31 per cent dextrose and 6.70 per cent aroma plus colour authorised according to specific purity criteria for food products. The concentrate is divided into doses suitable for at least one consumption, and in the case of powders, granules or syrup, it is deposited into moulds that will mark the shape and dimensions of the product. The extracts can be caffeine, orange, pineapple or tropical fruit.

Document US3660107 describes that it has now been found that the mixture of tartaric acid, citric acid and sodium bicarbonate, with a weight ratio of approximately 2:1:4, respectively, is an effervescent pair that is especially useful for the preparation of solid flavouring materials that dissolve by themselves, producing, after the addition of water, delicately flavoured beverages such as coffee, tea and the like. Surprisingly, this particular weight combination of tartaric and citric acids and the salt resulting from the effervescent action does not make the soft beverages unpalatable. The taste of coffee prepared from tablets containing this effervescent pair and an extract of dry coffee is, for all practical purposes, indistinguishable from coffee prepared from the extract per se. A particular advantage of the tablet form in contrast to a granulated flavour extract is, of course, the ability to prepare, reproducibly and conveniently from the tablets, a cup, jug, pot etc., of the beverage with the desired concentration. In addition to the solid flavouring or extract and the effervescent pair, one or more ingredients such as sugar, artificial sweeteners, powdered cream and the like can be added.

Document WO01/00038 provides a water-soluble formula in a solid state in granular or tablet form. The formulation is a natural product formulation containing an extract of green tea plant extract in combination with other ingredients that create an effervescent liquid composition when the formulation is dispensed in a liquid. The liquid form of administration, as well as the effervescent properties of the dissolved formulation, increase the bioavailability of the beneficial components of the green tea plants, such as polyphenols, increasing the rate and amount of absorption in the human body. The formulation may include additional components such as plant extracts, vitamins, ionic minerals and substances that are supposedly beneficial to health.

Finally, document WO9729642 describes an effervescent tablet comprising 38.13% sodium bicarbonate, 35.97% citric acid, 8.33% anhydrous sodium carbonate, 0.90% saccharin sodium and 16.67% concentrated extract of aromatic herbs, as well as an authorised effervescent excipient. The water must be hot or warm.

However, none of the documents mentioned in the state of the art describes a brewable beverage in a cold liquid made from different aromatic botanical vegetable and/or fruit species, in addition to other ingredients that can replace tonic beverages in their individual use as a soft drink or in combination with high-proof beverages such as gin.

### Explanation of the invention

This invention is defined by the claims and relates to a composition for infusion in a cold liquid with controlled effervescence, without gas or added sugars, comprising at least one sweetening compound in a percentage of less than 3% w/w of the dry composition, at least one flavouring compound in a percentage of less than 50% w/w of the dry composition and two effervescent compounds in a percentage equal to or higher than 50% w/w of the dry composition, wherein the effervescent compounds are tartaric acid and sodium bicarbonate. Thus, it relates to a range of infusions (brewable beverages) that can be substitutes for tonic in their individual use as a soft drink or combined with alcoholic beverages. The products claimed in this invention are differentiated from tonics known in the state of the art in that they do not contain gas or added sugars, as well as an innovative format. In addition, the product is brewable both in cold water, and in a high-proof beverage, at a temperature equal to or below room temperature, providing the desired sensory attributes in the resulting beverage.

The resulting product will be differentiated from the reference beverage by not adding gas to the resulting beverage. In addition, it will include effervescent ingredients in order to enhance the aromas of the final product. The selection of the ingredients responsible for providing the aromas and flavours is fundamental as they are key to sensory acceptance by consumers. Therefore, one objective of the invention is to develop a range with different sensory nuances, made from a selection of botanical vegetable or fruit species that, in an optimal proportion, provide a taste and smell to the final beverage. In addition, a controlled effervescence will be developed to enhance the appreciation of flavours and aromas without generating gas during consumption.

Therefore, one objective of the invention is to select ingredients capable of forming the new infusions, as well as those responsible for producing the effervescence. As well as to study and design the conditioning treatments of said ingredients, in order to ensure correct dispersibility and solubility in the liquid mixture, and to be able to achieve sensory attributes that can be satisfactorily accepted by consumers. Therefore, a stage of exhaustive study of botanical and effervescent ingredients was required in order to undertake the most suitable selection, as well in terms of conditioning technologies, in order to optimise their stability within the bag and their behaviour during infusion.

These objectives are achieved with a composition according to claim 1. Particular and/or preferred embodiments are described in the dependent claims.

### Detailed explanation of one embodiment of the invention

In the development of the brewable beverage of the invention, different ingredients were investigated. The tests conducted to obtain the optimal final composition of the brewable beverage are detailed below.

### Selection of ingredients

On the one hand, the flavouring ingredients that will make up the infusion were analysed and, on the other hand, the ingredients that will provide a controlled effervescence that will optimise the nuances of aroma provided by the aforementioned ingredients and offer consumers a complete experience. As basic ingredients, in terms of flavour, it was deemed essential to have those ingredients capable of providing the typical bitterness of tonic, as well as sweeteners that provide sweetness to the product. The following ingredients were therefore selected:
- Quinine, to provide bitterness, as already studied in previous tasks. In addition, the initial search undertaken showed that quinine is not a very common ingredient and so the possibility of adding naringin as a substitute was considered.
- Naringin is a flavonoid, a glycosidic flavone found in most citrus fruits. It is mainly extracted from the peel of citrus fruits, but it is also found, albeit in small quantities, in the pulp, juice, leaves, flowers and seeds of the plant. Naringin is the major cause for the bitter taste of citrus fruits.
- Steviol glycosides were selected as a sweetener. These are the chemical compounds responsible for the sweet taste of the leaves of the plant *Stevia rebaudiana* and are one of the main ingredients or precursors of many sugar substitutes or sweeteners labelled under the generic name Stevia or other trade names. Steviol glycosides of *Stevia rebaudiana* have been found to be 300 to 320 times sweeter than sucrose. These compounds are heat stable, have a stable pH, and do not undergo fermentation. It is for this reason that these sweeteners were selected over other sweeteners studied.

Due to the large number of combinations and flavours currently used in the production of mixed drinks with tonic, specifically gin and tonic, a first extensive selection of ingredients was made to study all the possibilities in the development of the products. This selection was possible thanks to the analysis performed in the previous task, the following flavouring compounds being those selected: juniper, rose hip, orange, lemon, lime, ginger, blueberries, strawberries, fruits of the forest/red berries, turmeric, hibiscus, basil, parsley, passion fruit, celery, lavender, liquorice, cinnamon, cardamom, star anise, orange blossom, peppermint, black pepper, vanilla, mango, green coffee, rooibos. These ingredients were sought in any of their available formats, such as aromas, extracts, plants, etc. They could also come from the peel or bark, pulp, leaves, flower or root.

The combination between them, as well as the doses of each one, would be defined in subsequent formulation design tasks, from which a final selection of the flavouring ingredients to be used based on the results obtained in the organoleptic evaluations.

The mechanism of action of the effervescence is achieved by a simple reaction that occurs between an acid with a sodium carbonate or bicarbonate in the presence of water. Below, an example is described in which bicarbonate and water react initially, giving rise to a hydrogencarbonate ion (HCO₃⁻) and the sodium ion (Na⁺). It is this hydrogencarbonate ion that reacts with an organic acid and gives rise, among other compounds, to carbon dioxide, a gas that forms small rising bubbles that explode on contact with air. Due to the fact that this reaction takes place with a minimum quantity of water, both the production and preservation of the product range to be developed must be designed to minimise contact with water.

Effervescence is a phenomenon that occurs between a weak acid and a salt, as mentioned above. This chemical reaction is dependent on different factors which must be monitored and evaluated in the development of the brewable mixture. The main factors that affect it are the temperature of the dilution medium, the concentration of the reagents and the contact surface of the particles responsible for developing this phenomenon. For this reason, the technical strategies proposed for the search for controlled effervescence are detailed below:
- Temperature: this factor affects effervescence in such a way that the higher the temperature, the higher the reaction speed. (Due to the fact that temperature increases the energy and speed of the atoms, and therefore raises the probability of collisions). According to the objective of this project, the dissolution medium is a cold liquid, and this factor would negatively affect its development, and other parameters would have to be adapted to achieve the phenomenon.

- Concentration of reagents: the concentration of the different ingredients that make up the infusion recipe will be directly proportional to the reaction speed, i.e., the higher the concentration of reagents, the greater the reaction speed. (Due to the fact that the more atoms that exist in a space, the more collisions and probability of them occurring). Due to this phenomenon, it will be necessary to work on the dose of the acid with respect to the salt, as well as the proportion of these ingredients in the general formula. By working on this, we will seek to achieve a reaction speed that facilitates its consumption, as well as to ensure that it lasts for a certain period of time and does not dilate over time.
- Contact surface: effervescence has usually been worked on in tablet form, and this format directly influences the reaction speed with respect to the powder format, which is due to the contact surface. Therefore, the greater the contact surface, the greater the reaction speed. (Due to the fact that the larger the area of atoms in contact, the greater the probability of collisions). The working strategy to address this characteristic will be to work with different granulometries in the ingredients characterised as effervescent, monitoring the reaction speed and the duration of this in the beverage.

Based on everything studied, in order to provoke the effervescence reaction in the range of products to be developed, combinations of different ingredients would be tested, with the objective of evaluating the type of effervescence they produce, as well as the possible contribution of flavours. Those selected were the following:
- Acid sources: the acidity of the effervescent reaction can be obtained from three main sources: acids, acid anhydrides and acid salts. The traditional sources of acidic materials are organic acids; however, some acid salts are also used. The following were pre-selected: citric acid, tartaric acid, ascorbic acid and malic acid. According to the present invention, the source of acid is tartaric acid.
- Carbon dioxide sources: sodium bicarbonate is used as a source of carbonate, being the most frequently used, and therefore selected, together with other carbonates. The main characteristic sought in these carbonates were that they should have good water solubility and not form precipitates. The following were pre-selected: sodium bicarbonate, calcium carbonate, magnesium carbonate, potassium carbonate, ammonium carbonate and sodium carbonate. According to the present invention, the source of carbon dioxide is sodium bicarbonate.

### Treatment for improving the infusion

Next, a study was carried out on those requisites or possible conditioning treatments that would be required to adapt the ingredients that would make up the brewable mixture, mainly seeking optimum humidity and granulometry, so as to favour their solubility in the liquid medium, providing consumers with pleasant sensory nuances in a given time, reminiscent of the refreshing beverage.

First of all, knowing that the product was intended for cold infusion, it was necessary to consider several critical points:
- Particle sizes: In cold water infusion, as well as carefully selecting the ingredients (not all of them perform "well" in cold water), the particle size must be minimised to maximise the contact surface with the water and allow extraction. In other words, in order to to achieve cold infusion, a small cut is preferable so that the product can be extracted in cold water (thus maximising contact surfaces). However, some products (e.g., dehydrated fruits) cannot be processed in a smaller cut, given the difficulty involved and the possible loss of sensory properties, and should therefore be sought in another format. Therefore, it will be necessary to establish the optimal midpoint to achieve the final target product.
- Format of the infusion bag: introducing a smaller particle, however, entails, in turn, a series of aspects to be taken into account. Firstly, the size of the bag mesh may cause dust to form on the wrappers and/or dirty the water, in other words, product may leak out from the bag if the mesh size is larger than the particle size of the ingredients. A filter paper bag format could be used to prevent this problem. In addition, changing the size of the mesh and the product has the positive point of enabling microencapsulated aromas to be added, which have better stability over time. However, a smaller bag mesh size, such as the filter paper format, could lead to possible problems when it comes to the release of effervescence from the bag into the liquid medium.

Therefore, bearing these aspects in mind, it was important to know both the size of the particle on which the ingredients were to be processed and the format of the infusion bag, considering both the pyramid-shaped nylon bag and the filter paper bag for the subsequent tests. The final selection would be made in subsequent tests after performing the relevant tests. On the other hand, based on the company's experience, as well as bearing in mind the importance of particle size for cold infusion, the parameters initially defined in terms of particle size were:
- For vegetable species, optimum dimensions of 0.2-1.2mm.
- For extracts, aromas and other elements apart from vegetable species, a particle size of 16 to 20 mesh.

These are the ideal sizes for the company's production, both for good infusion and packing. Therefore, all the ingredients are ordered in these size ranges from the suppliers and are checked upon reception by means of a sieving process.

Should larger particle sizes be required, a combination of grinding and sieving techniques would be used to obtain these optimal dimensions, according to the type of ingredients. These techniques will initially be tested in the laboratory, so that the information collected can subsequently be passed on to the ingredient suppliers. The equipment used will be mills of different capacities, in order to achieve smaller granulometries, which will need to be classified using sieves.

If, on the other hand, the particle size is smaller than the limitations imposed by the infusion bag format, other types of technique, such as encapsulation or compaction should be used to form agglomerates. A possible example could be quinine or effervescent ingredients, which are usually available in a low granulometry.

Encapsulation systems are usually applied to fruit juices due to their physico-chemical properties, thus achieving better results. This technique is normally used to monitor the mechanisms of material transfer and its kinetics for different purposes, such as achieving a prolonged release over time, as well as improving performance during infusion, thus obtaining a continuous or sustained dosage over time, the attributes of the ingredients lasting longer in the beverage. Another of its functions could be to protect the ingredients from moisture absorption, a very critical requirement in this type of product, both for prolonging the useful life of the products and improving their performance.

On the other hand, the possibility of achieving the formation of an agglomerate to achieve a larger granulometry for some of the ingredients has also been studied. There are different methods of achieving granulation:
- Application of temperature: this method consists of mixing the ingredients and the granulation of the resulting mixture is achieved by stirring it in equipment with heating at temperatures of between 75-100°C. When the dough, after having been properly kneaded and compressed, and having assumed a uniform plastic condition, is passed through sieves of a suitable size and the granules are then dried at a temperature of no more than 50°C.
- Dry granulation: dry granulation using compacting equipment is the simplest method, which requires fewer operations. However, not all excipient qualities are suitable for this technology. An alternative process to dry granulation is the direct compression of the mixture of all the raw materials, in an attempt to prevent operational and stability problems. But its application is limited to just a few cases, for example, when the active ingredient contains some water from crystallisation.
- Wet granulation: for this technique, it is necessary to use a granulation liquid, i.e., a binding liquid, such as water, alcohols or hydroalcoholic solutions, however, these may interact with the powdered ingredients and initiate the effervescent reaction, therefore, it is essential to manage the process very carefully.

In these densification techniques by means of the compression of the powdered ingredients, another ingredient with a binding function is often required, the moisture content of the mixture also being an essential control parameter in order to facilitate the pelletisation process. For this reason, an analysis of the most frequently used binders in the manufacture of tablets was also conducted in order to select those that could be used, should it be necessary to use this technique:
- Natural: sucrose, dextrose-maltose, lactose, starch, modified starch, cellulose, gum arabic, gum tragacanth, gelatine, dextrin, maltodextrin.
- Cellulose derivatives: methylcellulose, ethylcellulose; sodium carboxy-methylcellulose, hydroxypropyl methylcellulose (HPMC), Hydroxypropyl cellulose, microcrystalline cellulose.
- Synthetics: Polyvinyl pyrrolidone (PVP), Polyvinylpyrrolidone, Polyvinyl caprolactam, PEG.
- Calcium sulphate, dicalcium phosphate.

The possible disadvantages of adding a binder would be:
- Increased disintegration time
- Decrease in the dissolution rate of the effervescent product: this could hinder its rapid effect.

As well as bearing these factors in mind, it was necessary to analyse if each binder required a solution for its use, or whether they could be used dry. The binders initially considered as the best option were methylcellulose, hydroxypropyl methylcellulose and maltodextrin.

However, other possible treatments to be applied and which would be borne in mind in subsequent activities once product development began, were dehydration and freeze-drying, which were performed on fruits. These techniques are normally used due to the fact that excessively hygroscopic final products are achieved with other alternatives, which can cause product deterioration problems.
- Dehydration: a process by means of which the amount of water available in the food is reduced through the application of heat. This process can be performed in different equipment such as dehydrators or ovens, it being necessary to study optimum processing parameters such as: temperature, time, air circulation speed, the application of moisture. This will mainly depend on the starting format of the ingredient to be processed.
- Freeze-drying: a process whose purpose is to separate the water from a solution through freezing and subsequent sublimation of the ice at reduced pressure. For those products in which dehydration does not allow the water to be extracted from the food without altering its properties, this method should be used. This method reduces the biological and chemical enzymatic changes produced during dehydration and preserves the original flavours of the ingredients to a greater extent.

### Evaluation of different formulations of a brewable composition

Firstly, dosage tests were performed individually for each flavouring ingredient to ascertain the organoleptic characteristics it provides, especially colour, smell and taste in order to be able to design the most suitable combinations, as well as which attributes are enhanced or minimised with each one of them. The flavouring products are those previously indicated and have been tested in various proportions between 5 and 30%, depending on the intensity of their characteristics. In the tests, a sensory analysis was performed in the liquid medium, as well as a verification of the granulometry, and whether there was any kind of leakage from the infusion bag as a result.

Thus, it has been possible to determine the dosage ranges in which each of the ingredients is desired so that, in subsequent tasks, they can be mixed together. These dosage ranges are as follows: juniper: 3-8%, rose hip: 2-5%, orange: 4-12%, lemon: 4-10%, ginger: 3-6%, blueberries: 8-15%, strawberries: 8-15%, turmeric: 3-5%, hibiscus: 5-10%, basil: 5-7%, fruits of the forest: 8-15%, parsley: 5-7%, passion fruit: 8-15%, celery: 4-8%, lavender: 1-5%, liquorice: 1-5%, cinnamon: 5-15%, cardamom: 5-10%, star anise: 4-8%, orange blossom: 8-12%, peppermint: 3-5% and black pepper: 0.5-2%.

Once the ingredients and characteristics are known, a battery of tests was performed with combinations of these ingredients, adjusting each combination with different doses of the ingredient mixture in order to define the combination of tastes and adjusting the colour, smell and taste of each of the ingredients. These batteries of tests are developed by mixing the ingredients, homogenising, bagging and sealing. Once the samples have been prepared, they are placed in a glass with 200ml of cold water to check the infusion. The samples are evaluated at various times, a few minutes after placing the bags in the water, after 30 minutes and after 60 minutes. This procedure is due to the purpose of the product, since, when used to accompany alcoholic beverages, the bag will remain for a long time in the consumer's glass or beaker. This has made it possible to detect certain problems in some of the formulations, for example, that, with the passage of time, some of the recipes designed gave a very dark colour to the beverage, or an excessively intense taste, for which reasons these formulations were discarded or modified in future tests.

After performing each test, each formulation was evaluated organoleptically, taking the attributes of colour, smell and taste into account. In general, the main conclusions obtained for each taste were the following:
- Ginger. Infusions with ginger without other ingredients are found to have an excessively strong taste. In principle, those in which ginger is blended with other ingredients are preferred.
- Ginger with turmeric and lime or orange. With this type of combinations, pleasant flavours are achieved that are in tune with the aim of the project.
- Lemon and lime. This flavour is very popular with consumers, which is why it was pre-selected for development after market research, but when it comes to its development, it is not easy to achieve the touch of freshness conveyed by the combination of lemon and lime flavours expected by consumers.
- Rose hip and orange. A bad flavour combination that produces an unpleasant taste, for which reason it is discarded.
- Fruits of the forest and hibiscus. Finding aromas or a fruits of the forest infusion with a suitable aromatic profile has not been straightforward.
- Strawberry and hibiscus. The strawberry flavour must be enhanced with other types of aromas, and a suitable dose of hibiscus achieved, as the colouring it provides over the time it remains in the glass, turning greyish-pink due to the combination with the strawberry.
- Orange and cinnamon (and ginger). Orange provides a bitter taste and masks the cinnamon, so tests should be conducted to adjust the dose and use of the appropriate orange ingredient. It is a very popular flavour with consumers, which is why it is one of the flavours developed. It also produces a pleasant flavour with the addition of ginger.
- Strawberry and lemon. The strawberry is masked by the lemon in some of the formulations, which is why the touch of lemon must be very subtle. In addition, when combining with hibiscus, in order for it to appear the characteristic pink colour of strawberries, it is necessary to adjust the hibiscus dose so that, when kept for a while, it does not turn a purplish-brown pink.
- Blueberry and hibiscus (or ginger). The blueberry flavour achieved does not have sufficient intensity. In addition, we are working on adjusting the hibiscus dose due to the fact that the colouration of the product is pink during the first few minutes of infusion, but, when left to stand for longer, it darkens, resulting in visually unpleasant purplish-brown tones. With ginger, the flavour of it is over-identified, and also produces an earthy colour. Over time, the spicy flavour becomes more pronounced, it is too strong, which is why it is necessary to reduce the dosage.
- Peppermint and lemon. A pleasant flavour, although it is necessary to intensify it.
- Orange and orange blossom. The first tests are performed with various types of oranges, and some are discarded due to the fact that they generate bitterness in the product. The need to enhance the orange blossom flavour to appreciate it in the nose and mouth.
- Lemon and hibiscus. A good flavour was noted, with an intense translucent colour in the glass. It was therefore initially deemed to be correct.
- Lemon and parsley. It has a good flavour, but was deemed to be somewhat "weak", which is why it was discarded.
- Lime, fruits of the forest and hibiscus. A not very intense flavour was noted. The colouring is initially pinkish, and then turns a shade of mauve.
- Peppermint and hibiscus. It produces a pinkish colour. The peppermint flavour and smell are correct, but, over time, it smells more like peppermint than it tastes, which is why it is not deemed to be acceptable.
- Liquorice and lemon. The liquorice actually tastes like anise. It causes a cloudiness, yellowish in colour.
- Juniper and orange or lemon. A slight orange flavour is noted, the juniper should also be raised, because, in general, it smells like orange. The combination of juniper and lemon produces a pleasant, yet very subtle, flavour, and the juniper dose should be raised.
- Lime, lemon and pepper. It produces a yellowish colouring; the pepper dose should be lowered so that the rest of the flavours can be appreciated more.
- Green tea and lemon. It has a good citrus flavour and a hint of bitterness similar to tonic.

In these first tests, in general, little intensity was detected in the flavours when they were taken in the cold infusion, which is why it was decided to evaluate other flavours, as well as other types of formats, which would enable these sensory nuances to be improved, such as different cuts or particle sizes.

Thus, based on the research in previous tasks, the following combinations were proposed: rooibos and vanilla, ginger and mango, red berries, chai, ginger and orange, green coffee, green tea and lemon and other citrus fruits.

These flavours were generally popular, and most were deemed to be pleasant, however, the flavour intensity was still considered insufficient, which is why it was decided to increase the quantity of spices added to the bag, establishing a dosage of 45-50% for the flavouring ingredients. After performing the organoleptic evaluations with this increased dose, red berries, ginger-mango, citrus fruits and rooibos-vanilla were finally selected, as they were liked in terms of colour, flavour and smell, and the combinations of chai, green coffee and ginger-orange were discarded.

For the selection of the effervescent ingredients, it was decided to test a combination of an effervescent ingredient as a source of acids (ascorbic, tartaric, malic or citric acid) and as a source of carbon dioxide (micronised calcium carbonate, ultra-calcium carbonate, magnesium carbonate, sodium bicarbonate, potassium carbonate, ammonium carbonate or sodium carbonate).

These ingredients have been tested in solution both individually, to check if they provided any type of strange colour, smell or flavour not desired in the final product, since, as we have seen above, the combination of a carbonate with an acid produces an effervescent effect.

The method for performing these tests was the same as the one that will be performed later for the final products, since, in this way, the effectiveness and the required functionality are checked.

Therefore, tests were initially performed packing 2.5g of each one of the ingredients from the above list into an infusion bag and immersing it in 200ml of cold water, which will be the final method of use of this product. The following were therefore tested:
- Micronised calcium carbonate: provides white colouring and turbidity, the liquid becomes opaque.
- Ultra-calcium carbonate: provides a whitish colouring, although more translucent than micronised calcium carbonate.
- Magnesium carbonate: does not provide colouring and remains transparent. Tastes like medicine, slightly bitter.
- Sodium bicarbonate: does not provide colour or turbidity. A very neutral flavour.
- Potassium carbonate: depending on the acid with which it is combined, it may present a yellowish colour. Does not produce strange flavours. The effervescence has a short duration.
- Ammonium carbonate: it is translucent and colourless. Does not present strange flavours. The effervescence takes time to occur.
- Sodium carbonate: it has a slightly yellowish tinge depending on the acid with which it is combined. Effervescence occurs very rapidly and quickly disappears.

Thanks to these tests, sodium bicarbonate is selected as the ingredient to mix with the acids and produce the effervescence. However, it is observed that, depending on the packaging bag used, there is a slight loss of the ingredient, which is unacceptable. Thus, it was considered necessary to apply some of the techniques previously indicated, such as encapsulation and agglomeration.

Regarding the selection of acids:
- Ascorbic acid: does not cause turbidity, but, in combination with some of the carbonates, it produces yellowish colouring. It provides a pleasant acidic flavour.
- Tartaric acid: does not provide colour or turbidity. A more acidic flavour than the previous one, but pleasant.
- Malic acid: does not provide turbidity, but, in combination with some of the carbonates, it produces yellowish colouring. Not a very acidic flavour.
- Citric acid: does not provide colour or turbidity. Pleasant acidic flavour.

As a result of these tests, citric acid and tartaric acid were considered as ingredients to combine with sodium bicarbonate to produce effervescence. However, they had to be evaluated together with the rest of the ingredients. Once the chosen ingredients, sodium bicarbonate and citric or tartaric acid, are combined in different proportions, it is found that the material that the bag is made of is not suitable for effervescence to be produced in the liquid but remains in the bag almost entirely. Therefore, another type of bag, a pyramid-shaped bag made of nylon, which may be more suitable for this type of product, is tested. Finally, tartaric acid was selected as, in combination with bicarbonate, it produced a more effusive effervescence. After performing tests in different proportions, it is found that the optimal doses for producing effervescence and for other flavouring ingredients to be incorporated, are the following ranges:
- Sodium bicarbonate: 30-60%
- Tartaric acid: 15-40%

Once this task was reached, all the information acquired in the previous stages was available, and it was during this task that the formulas deemed to be the best were optimised, making all the necessary adjustments to the formulations, to subsequently carry out their pilot scale-up. It was at this point that recipes were formulated with all the flavouring, sweetening and effervescent ingredients that would make up each prototype. For the final definition of the formulations, sensory and behavioural analysis was conducted, both in cold water and in combination with a spirituous beverage (gin) with the following attributes:
- Solubility time of the mixture, minimum time to achieve the flavours
- Evaluation of flavour intensity
- Evaluation of the occurrence of precipitates
- Evaluation of effervescence, durability and intensity.

The final formulations validated at laboratory scale were as follows:

| TEST | A | B | C | D |
|---|---|---|---|---|
| INGREDIENTS | % | % | % | % |
| STEVIA infusion | 2.77% | 2.77% | 2,77% | 2.77% |
| Rooibos Vanilla | 46.68% | | | |
| Ginger Mango | | 46.68% | | |
| Red Berries | | | 46.68% | |
| Citrus Fruits | | | | 46.68% |
| Sodium bicarbonate (Agglomerated) | 24.08% | 24.08% | 24.08% | 24.08% |
| Tartaric acid (Agglomerated) | 26.47% | 26.47% | 26.47% | 26.47% |

For the taste tests, the procedure established was as follows:
1. Introduce the infusion bag into the glass.
2. Add 1 cube of ice, placed on top of the bag.
3. Add gin. (30ml)
4. Add cold water. (150ml)
5. Taste after 10 minutes.

In the case of the effervescent ingredients (tartaric acid and sodium bicarbonate), prior processing is required in order to obtain an agglomerate (pellet), and to avoid any kind of product leakage from the bag. Therefore, the agglomerates have the following composition:
- Tartaric acid (95%) + maltodextrin (Pineflow) (5%)
- Sodium bicarbonate (95%) + HPMC (Vivapur E15LV) (5%)

| **TEST** | **Evaluations** |
|---|---|
| A | Effervescence quite visible from the first moment and long-lasting. Excellent flavour, sweet with a hint of acidity. Practically no leakage from the bag. |
| B | Effervescence is visible after a few minutes and then in the mouth. Correct flavour, smell and colour. |
| C | Very nice colour, correct effervescence, but needs to be optimised. |
| D | Correct flavour, initially poor aroma and flavour, but, after 5-10 minutes, a more intense flavour and aroma is noted. Effervescence is visually ok and is appreciated in the mouth. |

## Claims

1. A composition for infusion in a cold liquid with controlled effervescence, without gas or added sugars, comprising at least one sweetening compound in a percentage of less than 3% w/w of the dry composition, at least one flavouring compound in a percentage of less than 50% w/w of the dry composition and two effervescent compounds in a percentage equal to or higher than 50% w/w of the dry composition wherein the effervescent compounds are tartaric acid and sodium bicarbonate.

2. The composition for infusion in a cold liquid with controlled effervescence according to claim 1 wherein the sweetening compound is present in a percentage of 2.77% w/w of the total dry composition.

3. The composition for infusion in a cold liquid with controlled effervescence according to claim 1 wherein the flavouring compound is present in the composition in a percentage of 46.68% w/w of the dry composition.

4. The composition for infusion in a cold liquid with controlled effervescence according to any of the previous claims wherein the flavouring compound is an aromatic vegetable and/or fruit extract.

5. The composition for infusion in a cold liquid with controlled effervescence according to claim 4 wherein the aromatic vegetable and/or fruit extract is at least one selected from: rooibos-vanilla, ginger-mango, red berries, citrus fruits and/or a combination thereof.

6. The composition for infusion in a cold liquid with controlled effervescence according to claim 1 wherein the tartaric acid is present in 26.47% w/w of the total dry weight of the composition.

7. The composition for infusion in a cold liquid with controlled effervescence according to claim 1 wherein the sodium bicarbonate is present in 24.08% w/w of the total dry weight of the composition.

8. The composition for infusion in a cold liquid with controlled effervescence according to any of the previous claims wherein the composition is packed in single-dose paper bags for instant infusion.

9. The composition for infusion in a cold liquid with controlled effervescence according to any of the previous claims wherein the cold liquid is water or a high-proof alcoholic beverage at or below room temperature.

## Patentansprüche

1. In kalte Flüssigkeit infusionierbare Zusammensetzung mit kontrollierter Brausewirkung, ohne Gas oder zugesetzte Zucker, umfassend mindestens eine Süßstoffverbindung in einem Prozentsatz von weniger als 3 % w/w der trockenen Zusammensetzung, mindestens eine Aromastoffverbindung in einem Prozentsatz von weniger als 50 % w/w der trockenen Zusammensetzung und zwei Brauseverbindungen in einem Prozentsatz gleich oder höher als 50 % w/w der trockenen Zusammensetzung, wobei die Brauseverbindungen Weinsäure und Natriumhydrogencarbonat sind.

2. In kalte Flüssigkeit infusionierbare Zusammensetzung mit kontrollierter Brausewirkung gemäß Anspruch 1, wobei die Süßstoffverbindung in einem Prozentsatz von 2,77 % w/w der gesamten trockenen Zusammensetzung vorhanden ist.

3. In kalte Flüssigkeit infusionierbare Zusammensetzung mit kontrollierter Brausewirkung gemäß Anspruch 1, wobei die Aromastoffverbindung in der Zusammensetzung in einem Prozentsatz von 46,68 % w/w der trockenen Zusammensetzung vorhanden ist.

4. In kalte Flüssigkeit infusionierbare Zusammensetzung mit kontrollierter Brausewirkung gemäß einem der vorhergehenden Ansprüche, wobei die Aromastoffverbindung ein aromatischer Gemüse- und/oder Fruchtextrakt ist.

5. In kalte Flüssigkeit infusionierbare Zusammensetzung mit kontrollierter Brausewirkung gemäß Anspruch 4, wobei der aromatische Gemüse- und/oder Fruchtextrakt mindestens einer ist, der aus Folgendem ausgewählt ist: Rooibos-Vanille, Ingwer-Mango, rote Beeren, Zitrusfrüchte und/oder eine Kombination davon.

6. In kalte Flüssigkeit infusionierbare Zusammensetzung mit kontrollierter Brausewirkung gemäß Anspruch 1, wobei die Weinsäure zu 26,47 % w/w des Gesamttrockengewichts der Zusammensetzung vorhanden ist.

7. In kalte Flüssigkeit infusionierbare Zusammensetzung mit kontrollierter Brausewirkung gemäß Anspruch 1, wobei das Natriumhydrogencarbonat zu 24,08 % w/w des Gesamttrockengewichts der Zusammensetzung vorhanden ist.

8. In kalte Flüssigkeit infusionierbare Zusammensetzung mit kontrollierter Brausewirkung gemäß einem der vorhergehenden Ansprüche, wobei die Zusammensetzung in Einzeldosis-Papierbeuteln zur sofortigen Infusion verpackt ist.

9. In kalte Flüssigkeit infusionierbare Zusammensetzung mit kontrollierter Brausewirkung gemäß einem der vorhergehenden Ansprüche, wobei die kalte Flüssigkeit Wasser oder ein hochprozentiges alkoholisches Getränk bei oder unter Raumtemperatur ist.

## Revendications

1. Composition pour infusion dans un liquide froid à effervescence contrôlée, sans gaz ni sucres ajoutés, comprenant au moins un composé édulcorant dans un pourcentage inférieur à 3 % p/p de la composition sèche, au moins un composé aromatisant dans un pourcentage inférieur à 50 % p/p de la composition sèche et deux composés effervescents dans un pourcentage égal ou supérieur à 50 % p/p de la composition sèche, les composés effervescents étant l'acide tartrique et le sodium bicarbonate.

2. Composition pour infusion dans un liquide froid à effervescence contrôlée selon la revendication 1, dans laquelle le composé édulcorant est présent dans un pourcentage de 2,77 % p/p de la composition sèche totale.

3. Composition pour infusion dans un liquide froid à effervescence contrôlée selon la revendication 1, dans laquelle le composé aromatisant est présent dans la composition dans un pourcentage de 46,68 % p/p de la composition sèche.

4. Composition pour infusion dans un liquide froid à effervescence contrôlée selon l'une quelconque des revendications précédentes dans laquelle le composé aromatisant est un extrait aromatique végétal et/ou de fruit.

5. Composition pour infusion dans un liquide froid à effervescence contrôlée selon la revendication 4, dans laquelle l'extrait aromatique végétal et/ou de fruit est au moins un choisi parmi : rooibos-vanille, gingembre-mangue, baies rouges, agrumes et/ou une combinaison de ceux-ci.

6. Composition pour infusion dans un liquide froid à effervescence contrôlée selon la revendication 1, dans laquelle l'acide tartrique est présent à raison de 26,47 % p/p du poids sec total de la composition.

7. Composition pour infusion dans un liquide froid à effervescence contrôlée selon la revendication 1, dans laquelle le bicarbonate de sodium est présent à raison de 24,08 % p/p du poids sec total de la composition.

8. Composition pour infusion dans un liquide froid à effervescence contrôlée selon l'une quelconque des revendications précédentes, dans laquelle la composition est conditionnée dans des sacs en papier unidose pour infusion instantanée.

9. Composition pour infusion dans un liquide froid à effervescence contrôlée selon l'une quelconque des revendications précédentes, dans laquelle le liquide froid est de l'eau ou une boisson alcoolisée à haute teneur à ou en dessous de la température ambiante.
